# EUROPEAN PATENT SPECIFICATION

(11) **EP 2 470 606 B1**
(45) Date of publication and mention of the grant of the patent: **27.11.2013**
(21) Application number: 10751882.1
(22) Date of filing: 24.08.2010
(51) Int. Cl.: C09B 61/00, C09C 1/44

(54) **HIGH STRENGTH CARBO SUBSTANCES**
Hochfeste Carbosubstanzen
Substances carbonées hautement résistantes

(30) Priority: 28.08.2009 EP 09168968
(43) Date of publication of application: 04.07.2012
(73) Proprietor: Chr. Hansen A/S, 2970 Hoersholm (DK)
(72) Inventor: KOEHLER, Klaus, DK-1820 Frederiksberg (DK); KENSOE, Martin, DK-2665 Vallensbaek Strand (DK)
(86) International application number: PCT/EP2010/062291
(87) International publication number: WO 2011/023673

(56) References cited:
- EP-A1- 2 011 835
- WO-A1-97/26802

## Description

The present invention relates to a water-dispersible black colouring substance, comprising carbo vegetabilis as a black pigment. The colouring substance may be used as a colouring agent in the manufacture of e.g. food and pharmaceutical products.

Colouring agents containing natural or synthetic colouring substances are commonly used as additives in the manufacturing of food products and pharmaceutical products. A wide range of such colouring agents is commercially available making it possible for the manufacturer, where a particular colour tone is desired, to select a single colouring agent having the desired colour or a mixture of colouring agents which in an appropriate combination impart the desired colour to the product.

The commercially available colouring agents can contain synthetic substances including substances that are also normally referred to as dyes or azodyes, or such agents can contain pigments or other colouring substances of natural origin, e.g. in the form of plant material containing a colouring substance, or as more or less purified colouring substances separated from plant, animal or microbial materials naturally containing such substances. There is a constant need for natural colouring substances covering all colour tones and also for improving any desired property of a particular colour substance. One particular colour, which is not commonly found in nature, is the colour black. A source for obtaining a colouring substance providing a black colour to e.g. food or pharmaceutical products is "carbo vegetabilis". This pigment substance is produced by the carbonisation of vegetable material.

Carbo vegetabilis is, in its pure form, a very light fine black powder which is extremely difficult to handle in e.g. production of food or confectionary. It is easily spread by currents in the air and is very difficult to clean off as it is very hydrophobic and not soluble in any normal cleaning agents, including acids, alkalis and organic solvents.

The nature of the colouring pigment therefore often requires that the pigment is provided in dispersed form.

Presently, such colouring substances containing carbo vegetabilis are produced by dispersing the pigment powder in glucose syrups or solutions of cellulose derivatives, thus, obtaining an aqueous paste which can be used "as is" or processed to provide a further colouring composition. Commercial available substances comprising carbo vegetabilis are not well suited for all applications particularly due to either:
- High viscosity
- or
- Low colouring strength
- or both

The problems associated with the above properties are among others that the high viscosity makes it difficult to move the products in a production plant by pumping and accordingly they must be transported manually. In addition, the low carbo strength makes it necessary to add increased volumes of the colouring substance in any particular application. Thus, large volumes of water need to be added possibly resulting in unwanted content of water and/or sugar in the food or pharmaceutical product.

A typical prior art product is described in Ingredients Handbook, Food Colours, edited by Victoria Emerton, published 2008 by Leatherhead Publishing. Products are characterised as water-dispersable pastes containing 10 wt% carbo vegetabilis. Product of higher strength are available, however, such products have an extremely high viscosity (see working examples hereinafter).

WO97/26802 is related to a water-dispersible pigment composition comprising water-insoluble and/or hydrophobic natural pigment dispersed without the use of a surface active substance in an aqueous phase comprising a hydrocolloid. Vegetable carbon black pigment is simply mentioned in a list of suitable water-insoluble hydrophobic natural pigment. None of the working examples of WO97/26802 use vegetable carbon black as a pigment.

EP2011835 is directed to a water-dispersible composition comprising at least one water-insoluble pigment and at least one starch octenyl succinate derivative as a hydrocolloid. EP2011835 has no mention of use of carbo vegetabilis as a pigment.

It is the object of the present invention, to provide a colouring substance containing carbo vegetabilis which circumvents the above illustrated disadvantages of the state in the art. This object is solved by a water-dispersible colouring substance comprising carbo vegetabilis and at least 1 wt% of at least one starch octenyl succinate derivative as a dispersion agent.

The present invention further relates to a method of preparing a water-dispersible colouring substance comprising dispersing carbo vegetabilis in an aqueous medium comprising at least one starch octenyl succinate derivative.

Moreover, the present invention relates to the use of the above described colouring substance for colouring of an edible or pharmaceutical product. An edible or pharmaceutical product comprising the above colouring substance is also provided by the present invention.

The water-dispersible colouring substance provided by the present invention is highly effective in the colouring of edible and pharmaceutical products. Also, the colouring substance of the present invention can be further processed using any know prior art technology including comminuting to obtain a colouring composition having a reduced particle size. Useful techniques include wet milling as described in e.g. WO91/06292. The excellent colouring properties of the colouring substance as provided can thus be further improved according to any particular need.

The quality of the resulting colouring composition of any further improvement process will always depend on the quality of the colouring "starting material". Accordingly, the colouring substance provided by the present invention is superior in such further processes as compared to state of the art products due to the above mentioned improved properties. Particularly, the colouring strength (total content of pigment) is a very important quality parameter of any colouring substance.

Current products contain around 10 wt% of carbo in dispersion whereas the colouring substance prepared according to the present invention may contain above 10 wt% carbo, such as above 15 wt%, such as above 20 wt%, such as above 25 wt%, such as above 30 wt%, and such as above 40 wt%. Thus the present invention may contain about 15 wt%, such as 20 wt%, such as 25 wt% or even higher contents such as about 30 wt%, 40 wt% or 50 wt% carbo. As appreciated by the person of skill in the art there is a very strong interrelationship between particle size, surface area and resulting viscosity of a given dispersion. Thus, a high content of carbo vegetabilis in the colouring substance is more readily achieved with larger particle sizes without compromising the viscosity.

A colouring substance having a lower content of carbo is also encompassed by the present invention. Such lower content may be in the range of 0.5 wt% to 10 wt%, including a content of about, 2 wt%, 4 wt%, 6 wt% and 8 wt% and including a range such as of 0.5 wt% to 8 wt%, such as of 0.5 wt% to 6 wt%, such as of 0.5 wt% to 4 wt%, such as of 0.5 wt% to 2 wt%.

In the present context the term "carbo vegetabilis" and "carbo" are used interchangeably to denote the black pigment powder which can be produced by e.g. slow pyrolysis, the heating of wood, sugar, bone char, or other substances in the absence of oxygen. The resulting soft, brittle, lightweight, black, porous material is also referred to as "charcoal" and can be further processed to activated carbon, also called activated charcoal or activated coal. As mentioned, the material is extremely porous and thus has a very large surface area. One gram of charcoal has a surface area in excess of 500 m². In addition, charcoal is very hydrophobic. These properties make the pigment powder exceptionally difficult to disperse.

However, dispersions are needed for all practical applications due to dusting problems related to the pigment powder.

Accordingly, dispersions containing carbo vegetabilis are commercially available. However, such state of the art colouring substances containing carbo vegetabilis have a high viscosity even with a low pigment powder content of around 10 wt%. The high viscosity is due to internal friction between the huge surface area of the powder particles and the dispersing agent. Thus, the manufacturer in need for a colouring substance providing a black colour tone and containing carbo vegetabilis have been forced to accept the "poor" properties of the state of the art colouring substances.

Surprisingly, the present inventors found that the use of starch octenyl succinate derivatives as dispersion agent makes it possible to disperse high amounts of carbo vegetabilis (even with a particle size of less that 10 µm) and at the same time obtain an excellent (low) viscosity as compared to prior art products and other modified starch. Until now a high quality colouring substance containing carbo vegetabilis has not been available.

It is important to note that the present dispersion is characterised herein as a "water-dispersible colouring substance". This colouring substance can be used "as is", as a "colouring agent", or can be considered a "colouring substance starting material" which can be further processed resulting in a "colouring composition". It is particularly important to appreciate as the quality of any colouring agent or composition is completely dependent on the quality of the colouring substance starting material.

The terms "carbo vegetabilis", "vegetable black" or "vegetable carbon", are specifically used in legislation for identification of substances which can be used as food colouring substances. Under the current EU legislation carbo vegetabilis is identified by the E-number E153.

According to the present invention, the carbo vegetabilis pigment powder is dispersed in water or an aqueous medium comprising at least one dispersion agent selected from starch octenyl succinate derivatives. Starch octenyl succinate is the common name given to starch n-octenyl succinate derivatives which are made by treating starch with n-octenyl succinic anhydride (nOSA) at pH 8 - 8.5. These starch derivatives are partly hydrophobic due to the C₈-alkene chain.

Preferably, starch octenyl succinate derivatives having a degree of substitution (D.S.) up to 0.11, more preferably up to 0.03 are used within the present invention.

Starch octenyl succinate derivatives have the common E-number E1450 according to EU food additive legislation.

The dispersion agent, a starch octenyl succinate derivative, is suitably used in an amount of at least 1 % by weight based on the total weight of the colouring substance. Thus, a content of at least 10 wt%, at least 20 wt%, at least 30 wt%, at least 40 wt%, at least 50 wt%, at least 60 wt%, and at least 70 wt% is encompassed by the present invention. Furthermore, it is contemplated that any amount in the range of about 1% to about 70% can be used. Thus, a content of about 10 wt%, about 20 wt%, about 30 wt%, about 40 wt%, about 50 wt%, and about 60 wt% of the dispersion agent in the colouring substance is encompassed by the present invention.

It should be noted that all percentages of the different materials/substances of the colouring substance (e.g. carbo vegetabilis and/or starch) are calculated as w/w percentage.

As evident to the skilled person - the composition of the invention may be dried to remove water and other relevant liquid/s. Thus, a dried or semi-dried colouring substance having a water content of less than 5 wt% based on the total composition or a water content of less than 1 % based on the total composition are contemplated.

Suitable methods for drying include spray drying, evaporation of water under reduced pressure, lyophilizing of the composition, spray cooling, belt drying and fluid bed drying. The person skilled in the art will readily apply the appropriate method for drying depending on the intended use of the dried composition.

Additional liquids/substances may be included in the colouring substance according to the invention. Such substances include but are not limited to: an antioxidant, a stabilising agent, a viscosity modifying agent, an alcohol, a resin or a preservative agent.

Further, the water-dispersible colouring substance of the present invention may comprise one or more plasticizing agents such as a carbohydrate or a sugar alcohol or a mixture thereof. The carbohydrate is preferably selected from the group consisting of a monosaccharide, a disaccharide and an oligosaccharide such as glucose, lactose, fructose and sucrose. The sugar alcohol can e.g. be selected from the group consisting of sorbitol, mannitol, dulcitol, adonitol and glycerol. The amount of the plasticizing agent is preferably in the range of 0 - 95 wt%, preferably in the range of 5 - 50 wt%, more preferably in the range of 10 - 30 wt% based on the total weight of the composition.

The water-dispersible colouring substance of the invention is prepared by the described method comprising dispersing carbo vegetabilis in an aqueous medium comprising at least one starch octenyl succinate derivative. A presently preferred method of preparation comprises the steps of a) dissolving the at least one starch octenyl succinate derivative in water, and b) dispersing the carbo vegetabilis in the starch octenyl succinate derivative solution.

As previously mentioned the carbo vegetabilis pigment powder particles have a very large total surface area due to the inherent nature of the charcoal. Obviously, the size of the carbo vegetabilis powder particles is decisive for the surface area and hence the viscosity of the resulting water-dispersible colouring substance. A reduction in particle size results in increased surface area and thus an increase in viscosity when the pigment powder is dispersed in the starch octenyl succinate solution. It is well know to the person of skill in the art that, as a general rule, the colour properties of any colour pigment particles substance and/or composition increase with decreasing pigment particle size. Thus, the average pigment particle size of the water-dispersible colouring substance of the invention is preferably less that 10 µm. Smaller particle size may be preferred for particular applications; such particle sizes include an average particle size of less than 5 µm, such as less than 2 µm or even an average particle of less than 1 µm. However, a water-dispersible colouring substance with a larger particle size is also included by the present invention. Such larger particle sizes include an average size of about 15 µm such as about 20 µm, 30 µm, 40 µm, 50 µm, or even higher such as an average particle size of about 60 µm, 70 µm or even 100 µm.

Current products according to the present invention may contain carbo vegetabilis:starch octenyl succinate derivative ratios of around 1. However, it is contemplated that, dependent on the carbo vegetabilis particle size, any ratio in the range of about 5:1 to 1:5 of carbo vegetabilis:octenyl succinate derivative, such as from about 5:1 to about 1:1, such as from about 1:1 to about 1:5, such as from about 3:1 to about 1:3, and such as from about 2:1 to about 1:2, can be used. Thus, a ratio of about 4:1, about 3:1, about 2:1, about 1:1, about 1:2, about 1:3, and about 1:4 is encompassed by the present invention. All ratios are calculated as w/w ratios.

As described, the "water-dispersible colouring substance of the invention" may be further processed using available prior art methods. One such suitable process is any process aimed at reducing the particle size of the resulting dispersion. The process of reducing particle size is conveniently added to the method of the invention as an additional step, as described hereinafter.

Further, the method of the invention may comprise the addition of a plasticizing agent such as a carbohydrate or a sugar alcohol either before or after the mixing of the colouring substance, and/or it may include the incorporation in the dispersion of at least one further component e.g. selected from an antioxidant, a stabilising agent, a viscosity modifying agent, an alcohol, a resin or a preservative agent.

The method of the invention resulting in a colouring substance with or without any further additive/s may be followed by comminution to obtain small discrete pigment bodies. Preferably, comminution is continued to an average particle diameter of less than 10 µm, more preferably less than 5 µm, even more preferably less than 5 µm, and even more preferably less than 2 µm. Most preferably, the average particle diameter is less than 1 µm. Applicable comminution methods include milling and wet milling, e.g. using a ball mill. Comminution may also be applied without any addition of the above mentioned.

The colouring substance of the invention can be used as all other colouring substances for providing a black colour tone to any edible product indented for human or animal consumption. Additionally, the colouring substance may be used in the manufacturing of pharmaceutical products. Obviously, the colouring-substance of the invention may be blended or mixed with any other colouring substance/s to provide a desired colour tone.

A particular useful application of the colouring substance of the present invention is the colouring of liquorice.

The present invention is further illustrated by the following examples.

### EXAMPLES

### EXAMPLE 1: Preparation of a water-dispersible colouring composition according to the invention.

| **Ingredient** | **Amount** |
|---|---|
| HiCap 100 (NOSA starch) | 130 grams |
| National Starch and Chemical Company | |
| Bridgewater, NJ 08807 | |
| USA | |
| Norit SX Super E153 | 250 grams |
| Norit Nederland BV | |
| Nijverheidsweg-Noord 72 | |
| P.O. Box 105 | |
| 3812 PM Amersfoort | |
| The Netherlands | |
| Demineralised water | 619 grams |

All ingredients were weighed and mixed in a glass beaker.
A black liquid containing 25 % of carbo powder and 13 wt% starch with an acceptable viscosity was obtained.

### EXAMPLE2: Preparation of a water-dispersible colouring composition according to the invention and further processing to reduce particle size.

| **Ingredient** | **Amount** |
|---|---|
| HiCap 100 (NOSA starch) | 120 grams |
| National Starch and Chemical Company | |
| Bridgewater, NJ 08807 | |
| USA | |
| Norit SX Super E153 | 150 grams |
| Norit Nederland BV | |
| Nijverheidsweg-Noord 72 | |
| P.O. Box 105 | |
| 3812 PM Amersfoort | |
| The Netherlands | |
| Demineralised water | 479.25 grams |
| Potassium sorbate | 0.75 grams |

All ingredients were weighed and mixed in a glass beaker.
A black liquid containing 20 % of carbo powder with low viscosity was obtained.

This liquid was submitted to ball milling (wet milling) in a Dyno-Mill (Willy A Bachofen AG Maschinenfabrik, CH-4132 Muttenz, Switzerland), three runs through the mill.
The product was measured on a Malvem Mastersizer (Malvern Instruments, UK) and a particle size of 2 microns (µm) was found.

### EXAMPLE 3: Preparation of a water-dispersible colouring composition according to the invention.

| **Ingredient** | **Amount** |
|---|---|
| HiCap 100 (NOSA starch) | 150 grams |
| National Starch and Chemical Company | |
| Bridgewater, NJ 08807 | |
| USA | |
| Norit SX Super E153 | 187.7 grams |
| Norit Nederland BV | |
| Nijverheidsweg-Noord 72 | |
| P.O. Box 105 | |
| 3812 PM Amersfoort | |
| The Netherlands | |
| Demineralised water | 412.5 grams |

All ingredients were weighed and mixed in a glass beaker.
A black liquid containing 25 % of carbo powder and 20 wt% starch with an acceptable viscosity was obtained.

### EXAMPLE 4: Comparison of viscosity and colouring strength of colouring substances of the invention with state of the art products.

Products produced in examples 1 and 3 were compared with commercial carbo vegetabilis preparations.

| **Product** | **Percentage of carbo vegetabilis** | **Evaluation of viscosity** |
|---|---|---|
| **CV-100-WDI** | | |
| Carbo vegetabilis suspended in a solution of hydroxy propyl methyl cellulose | | |
| (Christian Hansen A/S, Boege Allé 10-12 | 14 -16 % | Very high |
| DK-2970 Hoersholm | | |
| Denmark) | | |
| **49155 Sort farve** | | |
| Carbo vegetabilis suspended in water | | |
| (H.N.Fusgaard A/S | | |
| Valhoejs Allé 183 | | |
| DK-2610 Roedovre | 17-18 % | Extremely high |
| Denmark) | | |
| | | |
| Product of Example 1 | 25 % | Low/acceptable |
| Product of Example 3 | 25 % | Low/acceptable |

### EXAMPLE 5: Comparative example where a modified non-NOSA starch is used instead of NOSA starch (starch n-octenyl succinate derivatives which are made by treating starch with n-octenyl succinic anhydride) in the same concentration and same carbo/starch ratio as in Example 3.

| **Ingredient** | **Amount** | **%w/w** |
|---|---|---|
| Thermtex (Hydroxy propyl di-starch phosphate, E 1442) | 75.00 grams | 20.0 % |
| National Starch and Chemical Company | | |
| Bridgewater, NJ 08807 | | |
| USA | | |
| Norit SX Super E153 | 93.85 grams | 25.0 % |
| Norit Nederland BV | | |
| Nijverheidsweg-Noord 72 | | |
| P.O. Box 105 | | |
| 3812 PM Amersfoort | | |
| The Netherlands | | |
| Demineralised water | 206.25 grams | 55.0 % |

All ingredients were weighed and mixed in a glass beaker.
It was impossible to disperse the carbo powder in the liquid and the resulting product containing 25% of carbo powder was dry and lumpy - not a liquid like the one obtained in Example 3.

### REFERENCES

WO97/26802
EP2011835
WO91/06292

## Claims

1. A water-dispersible colouring substance comprising carbo vegetabilis and at least 1 wt% of at least one starch octenyl succinate derivative as a dispersion agent.

2. The colouring substance of claim 1, wherein the average particle diameter of the carbo vegetabilis particles is less than 10 µm.

3. The colouring substance of claim 2, wherein the average particle diameter of the carbo vegetabilis particles is less than 6 µm.

4. The colouring substance of claim 2, wherein the average particle diameter of the carbo vegetabilis particles is less than 1 µm.

5. The colouring substance according to any of claims 1 to 4, wherein the at least one dis-persion agent is present in an amount of at least 10 wt% based on the total composition.

6. The colouring substance according to any of claims 1 to 5, wherein the carbo vegetabilis:octenyl succinate derivative ratio is from about 5:1 to about 1:5.

7. The colouring substance according to any of claims 1 to 6 having a water content of more than 5 wt% based on the total composition.

8. The colouring substance according to any of claims 1 to 7 having a water content of less than 5 wt% based on the total composition.

9. A method for preparing the water-dispersible colouring substance according to any of claims 1 to 8, said method comprising dispersing carbo vegetabilis in an aquous medium comprising at least one starch octenyl succinate derivative.

10. The method according to claim 9 comprising the steps of a) dissolving the at least one starch octenyl succinate derivative in water and b) dispersing the carbo vegetabilis in the starch octenyl succinate derivative solution.

11. The method according to any of claims 9 and 10, further comprising the step of comminuting the dispersion to obtain a water-dispersible colouring substance with a reduced particle size.

12. A water-dispersible colouring substance obtainable by preparing a dispersion of carbo vegetabilis in an aquous medium comprising at least one starch octenyl succinate.

13. Use of a water-dispersible colouring substance according to any of claims 1 to 8 for colouring of an edible or pharmaceutical product.

14. An edible product comprising a water-dispersible colouring substance according to any of claims 1 to 8.

15. A pharmaceutical product comprising a water-dispersible colouring substance according to any of claims 1 to 8.

## Patentansprüche

1. In Wasser dispergierbarer Farbstoff mit Carbo vegetabilis und mindestens 1 Gew.% von mindestens einem Stärkeoctenylsuccinat-Derivat als Dispergiermittel.

2. Farbstoff nach Anspruch 1, wobei der durchschnittliche Teilchendurchmesser der Carbo-vegetabilis-Teilchen weniger als 10 µm ist.

3. Farbstoff nach Anspruch 2, wobei der durchschnittliche Teilchendurchmesser der Carbo-vegetabilis-Teilchen weniger als 6 µm ist.

4. Farbstoff nach Anspruch 2, wobei der durchschnittliche Teilchendurchmesser der Carbo-vegetabilis-Teilchen weniger als 1 µm ist.

5. Farbstoff nach einem beliebigen der Ansprüche 1 bis 4, wobei das mindestens eine Dispergiermittel in einer Menge von mindestens 10 Gew.% der Gesamtmasse vorhanden ist.

6. Farbstoff nach einem beliebigen der Ansprüche 1 bis 5, wobei das Verhältnis Carbo vegetabilis:Octenylsuccinatderivat ca. 5:1 bis ca. 1:5 ist.

7. Farbstoff nach einem beliebigen der Ansprüche 1 bis 6 mit einem Wassergehalt von mehr als 5 Gew.% der Gesamtmasse.

8. Farbstoff nach einem beliebigen der Ansprüche 1 bis 7 mit einem Wassergehalt von weniger als 5 Gew.% der Gesamtmasse.

9. Verfahren zur Herstellung des in Wasser dispergierbaren Farbstoffs nach einem beliebigen der Ansprüche 1 bis 8, wobei das Verfahren die Dispersion von Carbo vegetabilis in einem wasserhaltigen Medium umfasst, das mindestens ein Stärkeoctenylsuccinat-Derivat umfasst.

10. Verfahren nach Anspruch 9 mit folgenden Phasen: a) Auflösung des mindestens einen Stärkeoctenylsuccinat-Derivats in Wasser und b) Dispersion der Carbo vegetabilis in der Stärkeoctenylsuccinat-Derivat-Lösung.

11. Verfahren nach einem beliebigen der Ansprüche 9 und 10, des weiteren umfassend die Phase des Zerkleinerns der Dispersion, um einen in Wasser dispergierbaren Farbstoff mit verringerter Teilchengröße zu erhalten.

12. In Wasser dispergierbarer Farbstoff, erhältlich durch Herstellung einer Dispersion von Carbo vegetabilis in einem wasserhaltigen Medium, das mindestens ein Stärkeoctenylsuccinat umfasst.

13. Verwendung eines in Wasser dispergierbaren Farbstoffs nach einem beliebigen der Ansprüche 1 bis 8 zum Färben eines essbaren oder pharmazeutischen Produkts.

14. Lebensmittel mit einem in Wasser dispergierbaren Farbstoff nach einem beliebigen der Ansprüche 1 bis 8.

15. Pharmazeutisches Produkt mit einem in Wasser dispergierbaren Farbstoff nach einem beliebigen der Ansprüche 1 bis 8.

## Revendications

1. Colorant dispersable dans l'eau comprenant carbo vegetabilis et au moins 1% en poids d'au moins un dérivé d'octényl succinate d'amidon comme agent de dispersion.

2. Colorant de la revendication 1, où le diamètre moyen des particules de carbo vegetabilis est inférieur à 10 µm.

3. Colorant de la revendication 2, où le diamètre moyen des particules de carbo vegetabilis est inférieur à 6 µm.

4. Colorant de la revendication 2, où le diamètre moyen des particules de carbo vegetabilis est inférieur à 1 µm.

5. Colorant selon l'une quelconque des revendications 1 à 4, où au moins un agent de dispersion est présent dans une quantité d'au moins 10% en poids de la composition totale.

6. Colorant selon l'une quelconque des revendications 1 à 5, où le rapport carbo vegetabilis : dérivé de succinate d'octényl est d'environ 5:1 jusqu'à environ 1:5.

7. Colorant selon l'une quelconque des revendications 1 à 6 ayant un contenu d'eau de plus de 5 % en poids de la composition totale.

8. Colorant selon l'une quelconque des revendications 1 à 7 ayant un contenu d'eau de moins de 5 % en poids de la composition totale.

9. Méthode pour préparer le colorant dispersable dans l'eau selon l'une quelconque des revendications 1 à 8, ladite méthode comprenant la dispersion de carbo vegetabilis dans un milieu aqueux comprenant au moins un dérivé d'octényl succinate d'amidon.

10. Procédé selon la revendication 9 comprenant les phases a) dissoudre au moins un dérivé d'octényl succinate d'amidon dans l'eau et b) disperser le carbo vegetabilis dans la solution de dérivé d'octényl succinate d'amidon.

11. Procédé selon l'une quelconque des revendications 9 et 10, comprenant en plus l'étape de broyer la dispersion pour obtenir un colorant dispersable dans l'eau ayant la taille des particules réduite.

12. Colorant dispersable dans l'eau obtenu en préparant une dispersion du carbo vegetabilis dans un milieu aqueux comprenant au moins un octényl succinate d'amidon.

13. Utilisation d'un colorant dispersable dans l'eau selon l'une quelconque des revendications 1 à 8 pour colorer un produit pharmaceutique ou un produit comestible.

14. Produit comestible comprenant un colorant dispersable dans l'eau selon l'une quelconque des revendications 1 à 8.

15. Produit pharmaceutique comprenant un colorant dispersable dans l'eau selon l'une quelconque des revendications 1 à 8.
